(19) **Europäisches Patentamt / European Patent Office / Office européen des brevets**

(11) **EP 2 018 216 B1**

(12) **EUROPEAN PATENT SPECIFICATION**

(45) Date of publication and mention
of the grant of the patent:
**27.03.2013 Bulletin 2013/13**

(21) Application number: **07722594.4**

(22) Date of filing: **07.05.2007**

(51) Int Cl.:
**B01D 53/10** (2006.01)

(86) International application number:
**PCT/DK2007/000215**

(87) International publication number:
**WO 2007/128312 (15.11.2007 Gazette 2007/46)**

(54) **A METHOD AND AN APPARATUS FOR THE ABSORPTION OF GASES**

VERFAHREN UND VORRICHTUNG ZUR ABSORPTION VON GASEN

PROCÉDÉ ET APPAREIL PERMETTANT L'ABSORPTION DE GAZ

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **09.05.2006 DK 200600649**

(43) Date of publication of application:
**28.01.2009 Bulletin 2009/05**

(73) Proprietor: **Simatek A/S
4270 Höng (DK)**

(72) Inventor: **JENSEN, Arne, Grønbæk
DK-4480 St. Fuglede (DK)**

(74) Representative: **Zacco Denmark A/S
Hans Bekkevolds Allé 7
2900 Hellerup (DK)**

(56) References cited:
**EP-A- 0 103 881       EP-A- 0 711 908
DE-A1- 3 808 586       FR-A1- 2 401 691
JP-A- 11 237 023       US-A- 5 387 406
US-B1- 6 451 091**

## Description

The method relates to a method for the absorption of gases, preferably HCL, $SO_2$ and HF from a crude gas main stream, said method comprising complete or partial absorption of these unwanted gases to a desired level.

The invention also relates to an apparatus for the absorption of gases from a crude gas main stream, said apparatus comprising:

- a filter device for purifying a crude gas stream, said filter device comprising one or more filter elements that are separate from a combustion device;
- means for supplying an absorbent to the gas stream;
- means for removing the absorbent/residual product from the filter device.

The invention further relates to a computer-readable medium.

## Prior art

In case of conventional methods for the absorption of gases, for instance a dry absorption plant is used that comprises a quench which is a kind of cooling tower where atomized water is added to the gas. After the quench, a mixing chamber follows where an absorbent is added, and a bag filter, where the absorbent is collected on the filter bags, whereby an absorbent buffer is formed. It is a drawback of this type of plant that here the absorbent buffer is of unknown size.

The bag filter is preferably made with a number of filter bags that project into a dust chamber to the effect that the absorbent will deposit on the outsides of the individual bag filters. Sometime during the process, the filter is purified of residual product from absorbent, ie the part of the absorbent that has reacted with and hence absorbed unwanted gases. The purification of the filter bags entails that it is not only the part of the absorbent that has reacted with the gases in the flue gas that is purified by the filter, but also the part that has not yet reacted. The purification as such takes place by the filter bags being flushed with air blown through the filter bags in directions opposite the usual direction of the gas through-flow.

Thus, there is a risk that a large part of the yet usable absorbent is removed from the plant prior to it being utilized.

Addition of absorbent is controlled relative to emissions measured after the plant, it being an aim to keep the emissions below the statutory requirements for maximal emissions. The gases that are absorbed react chemically with the absorbent, whereby a residual product is formed. Depending on the quality of the conditions for the absorbent to be able to react, a buffer body of absorbent is formed on the bags. This absorbent buffer helps to ensure that the emissions are kept down in case of a sudden increase in the contents of the gases that are to be absorbed. Since the size of the absorbent buffer depends on the conditions in the flue gas, it means that, in case of poor conditions, a large absorbent buffer is built, since extra absorbent is dosed into the plant to obtain a performance that satisfies the requirement in respect of maximal emissions.

In document JP-A- 11 237023 is disclosed the absorption of noxious contaminants from an exhaust gas in which said gas is contacted with a solid absorbent, the gas is cooled and the mixture is filtered in a bag filter. In order to adjust the quantity of solid material which has to be added to the gas in function of the contaminants concentration, oxygen concentration measuring means and chlorobenzene concentration measuring means are installed before and after the filter. A central unit records the information, as well as the temperature within the furnace, and acts consequently onto the added quantity of absorbing material.

Good conditions mean that the conditions are present for quick and efficient reaction between absorbent and the substances that are to react with the absorbent. These conditions may be e.g. ideal temperature, ideal humidity or the like parameters.

In case of good conditions, a small body of absorbent buffer is sufficient, since, with good conditions, it will not be necessary with so much absorbent to satisfy the requirements in respect of maximal emission.

This has the drawback that the absorbent buffer is increased only when the conditions for exploitation are poor. If there are good conditions that provide good exploitation of the absorbent buffer, the absorbent buffer will be small.

This means that the plant is unable to react to sudden increases of a certain magnitude in the concentrations of the gases that it is desired to absorb, either due to the absorbent buffer being too small, or to the conditions for utilizing the absorbent buffer being poor.

## The novel aspect

It is the object of the invention to provide a method for the absorption of gases from a crude gas main stream, whereby the body of absorbent administered can be reduced; and to counter sudden increases of a certain magnitude in the concentrations of the gases it is desired to absorb.

This can be accomplished by controlling the administration of absorbent in accordance with the measured emissions. Hereby the size of the absorbent buffer will vary in response to how much of the buffer reacts with the gases due to the conditions in the flue gas.

In order to comply with the standards for allowed emissions in mean values per half hour and per twenty-four hours, it may be convenient to select one's control strategy based on continuous monitoring of said measured mean values.

When the process runs without major variations and with measurement results that forebode compliance with the admissible mean values, it will advantageous to employ a control strategy with a continuous addition of a given body of absorbent which is corrected relative to measured emissions.

In case of sudden increases of a certain magnitude in the concentrations of the gases it is desired to absorb, a control strategy is selected according to which a larger body of absorbent is added which is precisely sufficient for countering an increase in the admissible emissions. In this context it would also be relevant to take into consideration measurements of contents of gases in the crude gas stream and to take into consideration the given size of the absorbent buffer.

By controlling the dosage of absorbent in accordance with stoichiometric calculation based on measurement in the crude gas of the gases to be absorbed, the body of absorbent can be increased and any sudden increases of a given size in the concentrations of the gases it is desired to absorb may be countered whereby the increase in emissions which is ascribable to the increase in the concentration of undesired gases in the crude gas can be reduced. If or when the measured concentrations decrease, the body of absorbent can be lowered again.

If, at this point, one intervenes and controls the purification/flushing of the filter bags, to the effect that air is used for flushing when the absorbent buffer on the relevant bag is low, the effect is accomplished that the part of the absorbent/residual product which is flushed off the filter contains only a small portion of unreacted absorbent which enables a reduction in the consumption of absorbent.

This is accomplished by the method according to the invention, which method comprises the following steps:

- crude gas, which preferably comes from a combustion process, is fed into a filter device which is separate from the combustion device;
- an absorbent is added before or in the filter device;
- the absorbent is retained by the filter device;
- the absorbent is retained on the filter element(s) that partake(s) in the filter device;
- the absorbent combines chemically with the gases to be absorbed, and a residual product is formed;
- following a certain retention time, the absorbent/residual product is cleaned off the filter element(s) that partake(s) in the filter device;
- the absorbent is administered in such doses that a buffer of absorbent is accomplished on the filter element(s) that partake(s) in the filter device;
- wherein calculations are continuously performed of the buffer body of unreacted absorbent in the filter device, which calculation is performed by means of a control device and a calculator unit, based on measurements of the contents of some or at least one of the gas components of the crude gas that are to be absorbed and based on recording of the administered dose of absorbent body, which calculator unit is configured for estimating the body of absorbent buffer in the filter by summation of an amount of unreacted absorbent of a number of filter elements, wherein the amount of unreacted absorbent for a given filter element is determined by subtracting a stoichiometric amount of absorbent from a supplied amount of absorbent for the given filter element, where the amount of unreacted absorbent for a given filter element is set to zero when the given filter element is cleaned.

By using this method it is possible to ratio the body of absorbent to the actual emission with an ensuing minimal consumption of absorbent. According to an alternative embodiment of the invention in accordance with claim 2 the initial steps are performed successively.

By claim 3 it is obtained that it is possible to reduce the consumption of absorbent by taking one's starting point in the size of the absorbent buffer in the filter device and to ratio absorbent in accordance therewith.

By claim 4 is accomplished that it is possible to reduce the consumption of absorbent by taking one's starting point in an absorbent buffer size which is necessary for being able to cope with peak loads and to ratio absorbent in accordance therewith.

By claims 5-10 it is obtained that it is possible to lower the temperature and/or modify the humidity of the crude gas prior to it being fed into the filter device and hence to lower the consumption of absorbent.

By claim 11 a convenient manner of supplying absorbent to the plant is accomplished.

In claims 12-14 advantageous embodiments of filter devices and cleaning thereof by the method are obtained.

In claim 15 an apparatus is described for exercising the method, whereby it is possible to determine the requisite body of absorbent in the apparatus.

This is accomplished by the apparatus further comprising:

- a calculator unit for processing digital data; wherein the calculator unit is configured for estimating the body of absorbent buffer in the filter by summation of an amount of unreacted absorbent of a number of filter elements, wherein the amount of unreacted absorbent for a given filter element is determined by subtracting a stoichiometric amount of absorbent from a supplied amount of absorbent for the given filter element, where the amount of unreacted absorbent for a given filter element is set to zero when the given filter element is cleaned.

**[0029]** - Claim 16 relates to a computer readable medium for estimating the body of absorbent buffer in a filter device, wherein the amount of unreacted absorbent for a given filter element is determined by subtraction of a stoichiometric body of absorbent from a supplied amount of absorbent for the given filter element, wherein the amount of unreacted absorbent for a given filter element is set to zero when the given filter element is cleaned.

The invention will now be explained in closer detail with reference to the drawing, wherein:

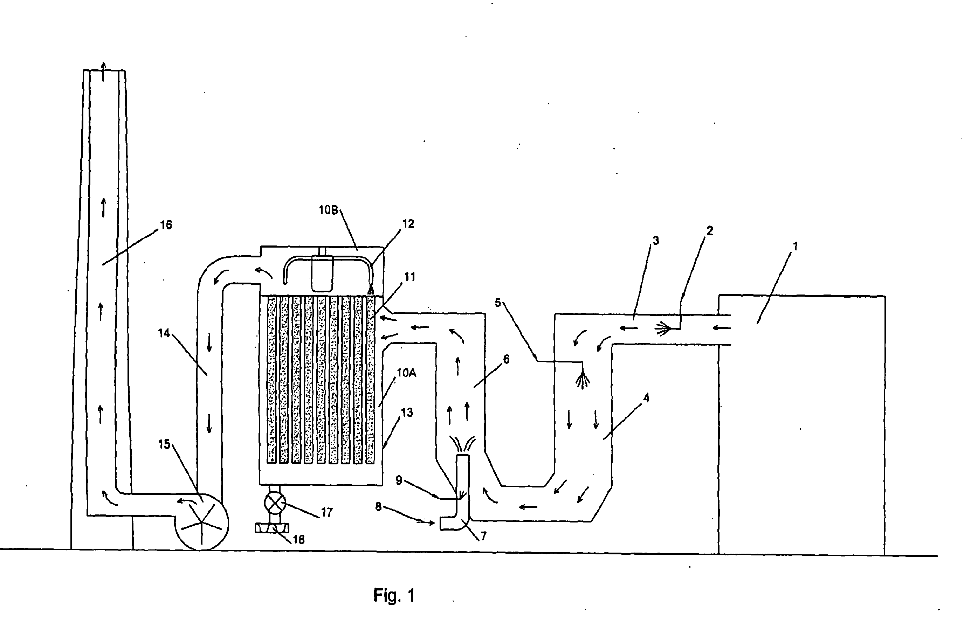

Figure 1 shows a flow through a plant in which the method is used; and

Figure 2 schematically shows an example of a operating system for determining the size of the absorbent buffer.

Now convenient embodiments of the invention will be described with reference to the drawing.

According to a first embodiment the invention comprises a filter device 13 with one or more filter elements 11 that project into a dust chamber 10A. An absorbent 9 is mixed in a mixing chamber 6 before the filter device 13 and is subsequently fed into the filter device 13, where the absorbent 9 settles and is retained on the outside of the filter elements 11. By measuring the concentration in a crude gas passage 3 of some of the gases that are to be absorbed, eg $SO_2$ and HCl, and combining this concentration with a measurement of the total amount of crude gas, the total amounts of the gas types to be absorbed are obtained. By measuring, in a clean gas passage 14, the emission of the same gases and combining it with a measurement of the total amount of clean gas, the total amounts of the gas types that travel through the absorption plant are obtained. By subtracting the total amount that travels through the absorption plant from the total amount fed into the absorption plant, the amount of gases that is absorbed in the absorption plant is obtained. Hereby the stoichiometric body of absorbent can be calculated. By simultaneously recording the administered dose of absorbent, it is possible to calculate the size of absorbent buffer body in the filter.

According to an exemplary embodiment the absorbent buffer body in the filter is calculated as follows: The administered dose of absorbent body 9 is assumed to be distributed evenly on all filter elements 11. It is assumed that an equal absorption of gases takes place on every element 11. It is recorded when each element 11 is cleaned. It is assumed that all absorbent/residual produce is cleaned off when the filter element 11 is cleaned. Based on these assumptions, account is continuously kept of each filter element 11, where it is calculated how much absorbent 9 is supplied and this is summated. The stoichiometric amount which spent in the removal of the gases that are absorbed by the absorbent 9 is subtracted from the added amount of absorbent 9. From this the amount of unreacted absorbent 9 sitting on each individual filter element 11 results. The amount is set to zero each time the element 11 is cleaned. By summating the amount of unreacted absorbent for all elements 11, the total buffer body of unreacted absorbent 9 sitting on the filter elements 11 is obtained. According to an exemplary embodiment, the plant is provided with a quench 4, where water is added by means of a nozzle 5. The water evaporates in the quench zone 4, whereby the temperature of the crude gas decreases, since energy is consumed in the heating and evaporation of the water. By adding water in this way, the humidity content in the crude gas is raised and by the crude gas being also cooled the relative air humidity is further increased. Increasing the relative humidity provides precisely the conditions it takes to achieve good exploitation of the absorbent buffer.

According to a further exemplary embodiment the plant is provided with vapour/steam supply. The vapour/steam is supplied in a nozzle 2 mounted in the crude gas pipe 3 before the filter device. Addition of vapour/steam provides the effect that the humidity content of the crude gas is increased without the crude gas being cooled. Depending on the vapour/steam temperature, the crude gas temperature may be either increased or be neutral. In case of elevated crude gas temperatures, however, the crude gas may be cooled somewhat by addition of vapour/steam that has a lower temperature.

According to an exemplary embodiment the plant is provided with supply of cooling gas 8. The cooling gas 8 which has a lower temperature than the crude gas is added in a mixing chamber 6. The cooling gas 8 is fed into the mixing chamber 6 via a cooling gas pipe 7. The crude gas is mixed with the cooling gas 8 in the mixing chamber 6. By mixing cooling gas 8 which has a lower temperature than crude gas with the crude gas, the effect is accomplished that the temperature of the mixed gas is lower than the temperature of the crude gas, whereby the relative humidity is increased relative to the relative humidity of the crude gas. A cooling gas 8, e.g. atmospheric air, can be used at a lower temperature than the crude gas - preferably at the temperature which is available in the surroundings of the plant.

According to one exemplary embodiment the absorbent 9 is administered to the cooling gas stream 8 in the cooling gas pipe 7. Hereby the effect is accomplished that the absorbent 9 is mixed with the crude gas in the mixing chamber 6 simultaneously with the admixture of crude gas and cooling gas, which yields a good distribution of the absorbent 9 in the crude gas.

According to one embodiment of the invention the filter device 13 is a bag filter with a number of filter bags 11 that extends into the dust chamber 10A. The filter device is provided with a filter flushing system 12 that cleans a small number of bags 11 at a time.

According to a preferred version one filter bag 11 at a time is cleaned.

By cleaning a small number of bags or one bag at a time the effect is accomplished that essentially a coat of absorbent is applied to the overall filter media area and thereby it is avoided that there are large areas without coating of absorbent.

Since a filter area without coating of absorbent yields poor absorption, it is advantageous that as much as possible of the filter medium surface has a coating of absorbent during the filter cleaning process.

By regulating the addition of water, steam/vapour or cooling gas or a combination thereof to the crude gas, it is possible to obtain the desired temperature and humidity of the crude gas prior to it being fed into the filter device along with the absorbent. This is precisely the reason why it is possible to create optimal conditions for the absorption process and hence the best possible exploitation of the absorbent buffer in the filter device. This, in combination with control of the absorbent buffer as taught above, provides the smallest consumption of absorbent while taking into consideration that the emissions can be kept low in case of sudden increase in the contents of the gases that are to be absorbed.

According to one exemplary embodiment the crude gas consists of flue gases from an incinerator 1. The flue gases are fed via a pipe 3 from the incinerator 1 to a quench 4. In the pipe 3, steam/vapour is supplied via the nozzle 2 to the flue gas. The temperature of the steam/vapour is, in the example, of such magnitude, that it hardly influences the flue gas temperature. The addition of steam/vapour increases the water content of the flue gas. In the quench 4 water is supplied from a nozzle 5. The water evaporates in the quench 4 and the temperature on the flue gas decreases and the water content in the flue gas is increased. The flue gas is advanced to the mixing chamber 6 where cooling gas 8 - e.g. atmospheric air - is supplied through the pipe 7. The absorbent 9 is added to the cooling gas 8 in the pipe 7. Flue gases, cooling gas 8 and absorbent 9 are admixed in the mixing chamber 6. The temperature of the mixture is lower than the temperature of the flue gases before the mixing chamber 6, which has the effect that the relative humidity increases. By addition of cooling gas instead of adding more water in the quench 4, it is accomplished that the risk of corrosion in the plant is reduced considerably. Humidity and temperature are measured in the clean gas passage 14, and the added body of steam/vapour, water and cooling gas is regulated to the effect that the desired temperature and humidity of the mixture is accomplished. The mixture is fed to the filter device 13, preferably a bag filter. The gases that are to be absorbed will be partially absorbed in the mixture of absorbent 9, flue gas and cooling gas 8 on its way through the mixing chamber 6 and the dust chamber 10A. The absorbent 9 is retained by the filter bags 11, and the gases that are to be absorbed combine with the absorbent 9 when the flue gases pass the absorbent 9 that sits on the outside of the bags. The remainder of the gases pass through the absorbent cake and through the filter medium, up through the cavity 11 of the filter bag, and up into the clean-air chamber of the filter 10B. From here the purified gases are discharged via a pipe 14 to a ventilator 15, that drives the gases through the plant and out into a chimney 16. Absorbent and residual product sitting on the bags are cleaned off the filter bags by means of a flushing system, a cleaning pulse being taken via a cleaning pulse tube 12 down into the cavity of the bag, whereby a superatmospheric pressure is generated inside the bag to dilate it and the cleaning pulse gas - preferably compressed air - is pressed through the bag medium against the flue gas stream. Thereby the cake, partly of residual product partly of absorbent, is loosened. The residual product is the part of the absorbent that has reacted with gases from the crude gas flow and hence no longer functions as absorbent.

This process is run continuously where a small number of bags are cleaned at a time; in a preferred embodiment one bag at a time. The residual product and absorbent drop to the bottom of the dust chamber 10A where they are discharged via a sluice 17 down into a conveyor unit 18 and out of the plant.

By adding absorbent along with cooling gas an improved reaction between gases and absorbent is accomplished, due to the fact that locally low temperatures arise that entail increased relative humidity. This can be done by adding the absorbent to or via the cooling gas stream.

The contents of some, and at least one, of the gas components that are to be absorbed are measured continuously in the flue gas coming from the incinerator 1. The measuring device that performs measurements on the flue gas, e.g. in the passage 3, measures the contents of the gases that account for the major part of the absorbent consumption. According to an exemplary embodiment where waste is incinerated, $SO_2$, HCl and HF are absorbed. Since absorption of HF accounts for only a small portion of the absorbent consumption, measurements are performed only on $SO_2$ and HCl.

The measurements are converted continuously to stoichiometric consumption of absorbent and the absorbent buffer is calculated as disclosed above.

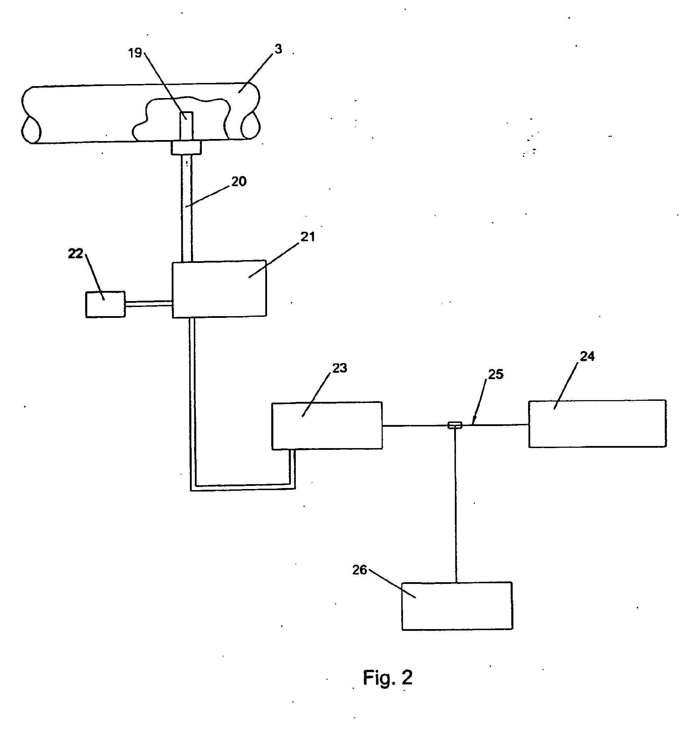

In the following an exemplary embodiment of this operating system is described with reference to Figure 2.

In the example, hydrated lime exemplifies absorbent, but every suitable absorbent may, of course, be used, the calculation formulas in the example being adapted in accordance with the used absorbent.

In the crude gas passage 3, a probe 19 is mounted which is connected to a tubular for taking samples, a so-called sampling tube 20. The sampled gas is driven by means of a pump 22 through the probe 19, the sampilng tube 20 and in through a measurement instrument 21 which may be e. g. of the IR type. By heating the sampling tube 20, it can be avoided that the gas condenses in the sampling tube 20.

The measurement equipment 21 sends a signal for each gas component that is measured, eg $SO_2$ and HCl, to the operating system 23, e.g. a PLC control, which, when analog signals are used, is provided with analog input cards. In the programme in the operating system 23, the signals are scaled and converted to values that are continuously stored in data blocs in the data register of the operating system 23. The operating system 23 is provided with net cards and is hence able to communicate with other systems, such as eg a SRO operating system 24 that controls the entire incinerator plant.

The stoichiometric consumption of absorbent and the absorbent buffer can be calculated in a calculator unit 26 which may e.g. be constituted of a PC coupled thereto.

The calculator unit 26 is coupled via a network 25 to the operating system 23 and to the operating system 24 of the incinerator plant. By means of a driver and communications software, information is compiled in the calculator unit 26 and commands are transmitted from the calculator unit to the operating system 23 and to the operating system 24 of the incinerator plant.

Exchange of information and commands, also designated data exchange, is performed continuously, e.g. at intervals of a few seconds. Thus only very little time will pass from the information being collected until commands can be given. In a PC as calculator unit, it will be possible to perform very demanding calculations and return commands to the system in a few seconds.

In an exemplary embodiment, the calculator unit 26 receives the following data from the operating system 23/the operating system 24 of the incinerator plant.

A = Volume flow of the clean gas $m^3$/h

B = Temperature clean gas C

C = volume share of water vapour/steam in clean gas %

D = Contents of HCl mg/$Nm^3$ dry clean gas

E = Contents of $SO_2$ mg/$Nm^3$ dry clean gas

F = Water supply in quench l/h

G = Addition of cooling gas dry $m^3$/h

H = Cooling gas temperature C

I = Contents of HCl mg/$Nm^3$ dry crude gas

J = Contents of $SO_2$ mg/$Nm^3$ dry crude gas

K = Consumption of hydrated lime kg/h

L = Weight of silo with hydrated lime Kg

M = Denominator value for bag flushing

A1 = Dry volume stream of clean gas in $Nm^3$/h is calculated = N(273+ T)*273*(1-C/100)

A2 = Dry volume stream of crude gas in $Nm^3$/h is calculated = A1-G/(273+H)*273.

At a fixed, short time interval the following calculations are performed. In the exemplary embodiment a time interval of 10 seconds is used.

For each filter element in the filter device, accounts are kept as follows: The accounts are updated every ten seconds.

N = Number of bags in the filter

O = Total amount of hydrated lime on the filter bag given in Kg

$$O = O + K/360/N$$

P = Stoichiometric consumption of hydrated lime given in Kg

$$P = P + ((I*1,01' + J*1,16)*A2-(D*1,01+E*1,16)*A1)/360.000.000/N$$

Q = buffer body of unreacted hydrated lime on each bag

Purity of hydrated lime may vary from different providers. In the exemplary embodiment hydrated lime of a purity of 85 % is used.

$$Q = O*0,85-P.$$

Each bag is assigned a number: Bag 1, bag 2, bag 3, bag 4 ..., - bag N.

For each bag accounts are kept with O, P and Q. The accounts are updated every ten seconds.

When M = bag number, the bag is cleaned and the values are reset.

The values of the bag designated M are set.

Set O = 0
Set P = 0
Set Q = 0

If M leaps at a larger interval than 1, the values for all the bags in the interval are set as above.

By summating the Q-value for all bags, the overall buffer body of active hydrated lime in the filter device is obtained.

By using a regulator loop to control the administered amount of lime in accordance with a specific buffer body of hydrated lime, this buffer body can be kept constant or at a desired level.

Hereby control is performed in accordance with the size of the buffer in order to be able to handle the peak loads, ie sudden increases of a certain magnitude in the concentrations of the gases it is desired to absorb.

Instead of controlling the absorbent administration after having obtained a specific buffer size, it is possible, according to an alternative embodiment, to control the administration of absorbent after emissions; that is administration of doses of absorbent is performed in accordance with continuous measurements of the flue gas that leaves the plant, and based on continuous measurements of the contents of the crude gas, whereby a given amount of absorbent suffices for the essentially present emission. Both ways give a lower dosage administration of absorbent than the prior art. The former method may optionally be used as supplement to the latter in case the latter method turns out to be insufficient.

In both cases it is possible to control the filter flushing such that it is selected to flush the filter when the buffer is low on the relevant filter element. Hereby the effect is accomplished that the residual product/the absorbent that is flushed away contains as little unreacted absorbent as possible, which contributes to a smaller consumption of absorbent.

**Claims**

1.  A method for the absorption of gases from a crude gas main stream, which method comprises the following steps:

    - crude gas, which preferably comes from a combustion process, is fed into a filter device which is separate from the combustion device;
    - an absorbent is added before or in the filter device;
    - the absorbent is retained by the filter device;
    - the absorbent is retained on the filter element(s) that partake(s) in the filter device;
    - the absorbent combines chemically with the gases to be absorbed, and a residual product is formed;
    - following a certain retention time, the absorbent/residual product is cleaned off the filter element(s) that partake(s) in the filter device;

- the absorbent is administered in such doses that a buffer of absorbent is accomplished on the filter element(s) that partake(s) in the filter device;
- **characterised in that** calculations are continuously performed of the buffer body of unreacted absorbent (9) in the filter device (13), which calculation is performed by means of a control device (23) and a calculator unit (26), based on one or more measurements of the contents of some or at least one of the gas components of the crude gas that are to be absorbed and based on recording of the administered dose of absorbent body, which calculator unit (26) is configured for estimating the body of absorbent buffer in the filter by summation of an amount of unreacted absorbent (9) of a number of filter elements (11), wherein the amount of unreacted absorbent for a given filter element is determined by subtracting a stoichiometric amount of absorbent from a supplied amount of absorbent (9) for the given filter element (11), where the amount of unreacted absorbent (9) for a given filter element (11) is set to zero when the given filter element (11) is cleaned.

2. A method for the absorption of gases from a crude gas main stream according to claim 1, **characterised in that** the method steps are successive.

3. A method according to claim 1 or 2, **characterised in that** the administration of the absorbent (9) is controlled on the basis of the registered size of absorbent buffer in the filter device (13).

4. A method according to claim 1 or 2, **characterised in that** the administration of the absorbent (9) is controlled on the basis of a desired size of absorbent buffer.

5. A method according to claim 1 or 2, **characterised in that** the crude gas is supplied with water prior to it reaching the filter device (13).

6. A method according to claim 1 or 2, **characterised in that** the crude gas is supplied with vapour/steam prior to it reaching the filter device (13).

7. A method according to claim 1 or 2, **characterised in that** the crude gas is supplied with a cooling gas (8) prior to it reaching the filter device (13).

8. A method according to claim 7, **characterised in that** the cooling gas (8) is atmospheric air.

9. A method according to claim 5, 6, 7 or 8, **characterised in that** a desired temperature of the crude gas is accomplished by the amount of water, vapour/steam, cooling gas (8) or the like being regulated prior to the crude gas being fed to the filter device (13).

10. A method according to claim 5, 6, 7 or 8, **characterised in that** a desired humidity of the crude gas is accomplished by the amount of water, vapour/steam, cooling gas (8) or the like being regulated prior to the crude gas being fed to the filter device (13).

11. A method according to one of claims 1-10, **characterised in that** the absorbent (9) is added via a cooling gas stream (7).

12. A method according to one of claims 1-11, **characterised in that** the filter device (13) is a bag filter with a number of filter bags (11) that extend into a dust chamber (10A).

13. A method according to claim 12, **characterised in that** one filter bag (11) at a time is cleaned.

14. A method according to one of claims 12 or 13, **characterised in that** the filter bags (11) are cleaned individually.

15. An apparatus for the absorption of gases from a crude gas main stream, said apparatus comprises:

- a filter device for purifying a crude gas stream, said filter device comprising one or more filter elements that are separate from a combustion device;
- means for supplying an absorbent to the gas stream;
- means for removing the absorbent/residual product from the filter device,
**characterised in that**
the apparatus further comprises:

- a calculator unit (26) for processing digital data;
wherein the calculator unit is configured for estimating the body of absorbent buffer in the filter by summation of an amount of unreacted absorbent (9) of a number of filter elements (11), wherein the amount of unreacted absorbent for a given filter element is determined by subtracting a stoichiometric amount of absorbent from a supplied amount of absorbent (9) for the given filter element (11), where the amount of unreacted absorbent (9) for a given filter element (11) is set to zero when the given filter element (11) is cleaned.

16. A computer readable medium comprising stored information to cause one or more calculator units to estimate the body of absorbent buffer in a filter device for cleaning a crude gas stream, said filter device (13) comprising one or more filter elements (11) that are separate from a combustion unit (1), by summation of an amount of unreacted absorbent (9) of a number of filter elements (11), wherein the amount of unreacted absorbent (9) for a given filter element (11) is determined by subtracting a stoichiometric body of absorbent from a supplied amount of absorbent (9) for the given filter element (11), where the amount of unreacted absorbent (9) for a given filter element (11) is set to zero when the given filter element (11) is cleaned.

**Patentansprüche**

1. Verfahren zur Absorption von Gasen aus einem Rohgashauptstrom, we l-ches Verfahren die folgenden Schritte umfasst:

- Rohgas, welches bevorzugt von einem Verbrennungs verfahren stammt, wird in eine von der Ve rbrennungsvorrichtung getrennte Filtervorrichtung g e-speist;
- ein Absorptionsmittel wird vor der Filtervorrichtung oder in die Filtervorric htung zugeführt;
- das Absorptionsmittel wird von der Filtervorrichtung zurückgehalten;
- das Absorptionsmittel wird auf dem/den Filterelement(en) zurückgehalten, welche(s) Teil(e) der Filtervorrichtung ist/sind;
- das Absorptionsmittel kombiniert sich chemisch mit den zu absorbierenden Gasen, und ein Restprodukt wird gebildet;
- nach einer bestimmten Retentionszeit wird das Absorptions -/Restprodukt von dem/den Filterel ement(en), welche(s) Teil (e) der Filtervorrichtung ist/sind, abgereinigt;
- das Absorptionsmittel wird in solchen Dosen verabreicht, bis ein Absorptionskörper auf dem/den Filterelement (en), welche(s) Teil(e) der Filtervorrichtung ist/sind, erreicht wird,
- **dadurch gekennzeichnet, dass** Kalkulationen über den Pufferkörper von unumgesetztem Absorptionsmittel (9) in der Filtervorrichtung (13) kontinuie r-lich durchgeführt werden, welche Kalkulation mittels einer Steuereinrichtung (23) und eines Rechenwerks (26), auf der Basis von einer oder mehrere n Messungen des Gehalts einiger oder mindestens einer der Gas komponenten des zu absorbierenden Rohgases und auf der Basis von einer Erfassung der verabreichten Dosis von Absorptionskörper durchgeführt wird, welches R e-chenwerk (26) dazu ausgebildet ist, den Körper von Absorptionspuffer in dem Filter durch Summierung einer Menge von unumgesetztem Absorptionsmittel (9) einer Anzahl von Filterelementen (11) auszuwerten, wobei die Menge von unumgesetztem Absorptionsmittel für ein jeweiliges Filterelement durch Subtraktion einer stöchiometrischen Menge von Absorptionsmtitel von einer g e-lieferten Menge von Absorptionsmittel (9) für das jeweilige Filterelement (11) bestimmt wird, wobei die Menge von unumgesetztem Absorptionsmittel (9) für ein jeweiliges Filterelement (11) bei der Reinigung des jeweiligen Filterelements (11) auf null gesetzt wird.

2. Verfahren zur Absorption von Gasen aus einem Rohgashauptstrom nach Anspruch 1, **dadurch gekennzeichnet, dass** die Verfahrensschritte aufeinanderfolgend erfolgen.

3. Verfahren nach Anspruch 1 oder 2, **dadurch gekennzeichnet, dass** die Verabreichung des Absorptionsmittels (9) auf der Basis von der erfassten Größe von Absorptionspuffer in der Filtervorrichtung (13) geregelt wird.

4. Verfahren nach Anspruch 1 oder 2, **dadurch gekennzeichnet, dass** die Verabreichung des Absorptionsmittels (9) auf der Basis von einer gewünschten Größe von Absorptionspuffer geregelt wird.

5. Verfahren nach Anspruch 1 oder 2, **dadurch gekennzeichnet, dass** das Rohgas vor Erreichen der Filtervorrichtung (13) mit Wasser versorgt wird.

6. Verfahren nach Anspruch 1 oder 2, **dadurch gekennzeichnet, dass** das Rohgas vor Erreichen der Filtervorrichtung (13) mit Wasse rdampf/Dampf versorgt wird.

7. Verfahren nach Anspruch 1 oder 2, **dadurch gekennzeichnet, dass** das Rohgas vor Erreichen der Filtervorrichtung (13) mit einem Kühlgas (8) ve r-sorgt wird.

8. Verfahren nach Anspruch 7, **dadurch gekennzeichnet, dass** das Kühlgas (8) atmosphärische Luft ist.

9. Verfahren nach Anspruch 5, 6, 7 oder 8, **dadurch gekennzeichnet, dass** eine gewünschte Temperatur des Rohgases durch die Menge von Wasser, Wasserdampf/Dampf, Kühlgas (8) oder dergleichen erreicht wird, welche Menge vor dem Einspeisen des Rohgases in die Filtervorrichtung (13) geregelt wird.

10. Verfahren nach Anspruch 5, 6, 7 oder 8, **dadurch gekennzeichnet, dass** eine gewünschte Feuchtigkeit des Rohgases durch die Menge von Wasser, Wasserdampf/Dampf, Kühlgas (8) oder dergleichen erreicht wird, welche Menge vordem Einspeisen des Rohgases in die Filtervorrichtung (13) geregelt wird.

11. Verfahren nach einem der Ansprüche 1 bis 10, **dadurch gekennzeichnet, dass** das Absorptionsmittel (9) über einen Kühlgasstrom (7) zugeführt wird.

12. Verfahren nach einem der Ansprüche 1 bis 11, **dadurch gekennzeichnet, dass** die Filtervorrichtung (13) ein Sackfilter mit einer Anzahl von in eine Staubkammer (10A) sich erstreckenden Filtersäcken (11) ist.

13. Verfahren nach Anspruch 12, **dadurch gekennzeichnet, dass** ein Filtersack einer nach dem anderen gereinigt wird.

14. Verfahren nach einem der Ansprüche 12 oder 13, dadurch geken n-zeichnet, dass die Filtersäcke (11) einzeln gereinigt werden.

15. Vorrichtung zur Absorption von Gasen aus einem Rohgashaupt strom, welche Vorrichtung umfasst:

  - eine Filtervorrichtung zur Reinigung eines Rohgasstroms, welche Filtervo r-richtung ein oder mehrere , von einer Verbrennungsvorric htung getrennte(s) Filterelement(e) aufweist;
  - Mittel für die Zufuhr eines Absorptionsmittels zum Gasstrom;
  - Mittel zum Entfernen des Absorptions -/Restproduktes aus der Filtervorrichtung,
  **dadurch gekennzeichnet, dass**
  die Vorrichtung ferner umfasst:
  - ein Rechenwerk (26) zur Verarbeitung digitaler Daten;
  wobei das Rechenwerk dazu ausgebildet ist, den Körper von Absorptionspuffer in dem Filter durch Summierung einer Menge von unumgesetztem A b-sorptionsmittel (9) einer Anzahl von Filterelementen (11) auszuwerten, wobei die Menge von unumgesetztem Absorptionsmittel für ein jeweiliges Filterelement durch Subtraktion einer stöchiometrischen Menge von Absorptionsmi t-tel von einer gelieferten Menge von Absorptionsmittel (9) für das jeweilige Filterelement (11) bestimmt wird, wobei die Menge von unumgesetztem A b-sorptionsmittel (9) für ein je weiliges Filterelement (11) bei der Reinigung des Filterelements (11) auf null gesetzt wird.

16. Computerlesbares Medium umfassend gespeicherte Information, welche ein oder mehrere Rechenwer k(e) dazu bewegen kann, den Körper von A b-sorptionspuffer in einer Filtervorrichtung zur Reinigung eines Rohgasstroms, welche Filtervorrichtung (13) ein o der mehrere von einer Verbrennungsei n-heit (1) gesonderte(s) Filterelement(e) (11) aufweist, durch Summierung e i-ner Menge von unumg esetztem Absorptionsmittel (9) einer Anzahl von Filterelementen (11) auszuwerten, wobei die Menge von unumgesetztem A b-sorptionsmittel (9) für ein jeweiliges Filterelement (11) durch Subtraktion e i-nes stöchiometrischen Absorptions körpers von einer gelieferten Menge von Absorptionsmittel (9) für das jeweilige Filterelement (11) bestimmt wird, w o-bei die Menge von unumgesetztem Absorptionsmittel (9) für ein jeweiliges Filterelement (11) bei der Reinigung des Filterelements (11) auf null gesetzt wird.

## Revendications

1. Procédé permettant l'absorption de gaz à partir d'un courant de gaz brut principal, ledit procédé comprenant les étapes suivantes:

- le gaz brut, qui vient de préférence à partir d'un processus de co m-bustion, est introduit dans un dispositif de filtration qui est sé paré du dispositif de combustion;
- un absorbant est ajouté avant ou dans le dispositif de filtration;
- l'absorbant est retenu par le dispositif de filtration;
- l'absorbant est retenu sur l'élément ou les éléments de filtre faisant partie du dispositif de filtration;
- l'absorbant se combine chimiquement avec les gaz à absorber, et un produit résiduel est formé;
- après un certain temps de rétention, le pro duit absorbant/résiduel est enlevé en nettoyant l'élément ou les éléments de filtre faisant partie du dispositif de filtration;
- l'absorbant est administré à de telles doses que un tampon d'absorbant est réalisé sur l'élément ou les éléments de filtre faisant partie du dispositif de filtration,
- **caractérisé en ce que** les calculs sont effectués en continu sur le corps de tampon d'absorbant qui n'a pas réagi (9) dans le dispositif de filtration (13), ledit calcul étant effectué au moyen d'un dispositif de commande (23) et d'une unité de calcul (26) sur la base d'une ou plusieurs mesures de la teneur de certains ou d'au moins un des composants de gaz du gaz brut qui sont à absorber et sur la base de l'enregistrement de la dose administrée de corps absorbant, ladite unité de calcul (26) étant configurée pour l'estimation d u corps du tampon d'absorbant dans le filtre par la sommation d'une quantité d'absorbant qui n'a pas réagi (9) d'un nombre d'éléments de filtre (11), la quantité d'absorbant qui n'a pas réagi (9) pour un élément de filtre donné étant déterminée par la sous traction d'une quantité stoechiométrique d'un absorbant d'une quantité fournie d'absorbant (9) pour l'élément de filtre donnée (11), la quantité d'absorbant qui n'a pas réagi (9) pour un élément de filtre donné (11) étant fixé à zéro lorsque l'élément de filtre donné (11) est nettoyé.

2. Procédé permettant l'absorption de gaz à partir d'un courant de gaz brut principal selon la revendication 1 , **caractérisé en ce que** les étapes du procédé sont successives.

3. Procédé selon la revendication 1 ou 2, **caractérisé en ce que** l'administration de l'absorbant (9) est commandée sur la base de la taille enregistrée du tampon d'absorbant dans le dispositif de filtration (13).

4. Procédé selon la revendication 1 ou 2, **caractérisé en ce que** l'administration de l'absorbant (9) est commandé e sur la base d'une taille souhaitée du tampon d'absorbant.

5. Procédé selon la revendication 1 ou 2, **caractérisé en ce que** le gaz brut est alimenté avec de l'eau avant qu'il n'atteigne le dispositif de filtration (13).

6. Procédé selon la revendication 1 ou 2, **caractérisé en ce que** le gaz brut est alimenté avec du vapeur/ vapeur d'eau avant qu'il n'atteigne le dispositif de filtration (13).

7. Procédé selon la revendication 1 ou 2, **caractérisé en ce que** le gaz brut est alimenté avec un gaz de refroidissement (8) avant qu'il n'atteigne le dispositif de filtration (13).

8. Procédé selon la revendication 7, **caractérisé en ce que** le gaz de refro i-dissement (8) est de l'air atmosphérique.

9. Procédé selon la revendication 5, 6, 7 ou 8, **caractérisé en ce qu'**une température souhaitée du gaz brut est réalisée au moyen de la quantité d'eau, de vapeur/vapeur d'eau, de gaz de refroidissement (8) ou analogue étant réglée avant que le gaz brut ne soit alimenté dans le dispositif de filtration (13).

10. Procédé selon la revendication 5, 6, 7 ou 8, **caractérisé en ce qu'**une humidité souhaitée du gaz brut est réalisée au moyen de la quantité d'eau, de vapeur/vapeur d'eau, de gaz de refroidissement (8) ou analogue étant réglée avant que le gaz brut ne soit alimenté dans le dispositif de filtration (13).

11. Procédé selon l'une quelconque des revendications 1 à 10, **caractérisé en ce que** l'absorbant (9) est ajouté par l'intermédiaire d'un courant de gaz de refroidissement (7).

12. Procédé selon l'une qu elconque des revendications 1 à 11 , **caractérisé en ce que** le dispositif de filtration (13) est un filtre à sacs avec un certain nombre de sacs filtrants (11) qui s'étendent dans une chambre à poussières (10A).

13. Procédé selon la revendication 12, **caractérisé en ce que** l'un sac filtrant (11) est nettoyée un par un.

14. Procédé selon l'une quelconque des revendications 12 ou 13, **caractérisé en ce que** les sacs filtrants (11) sont nettoyés individuellement.

15. Dispositif permettant l'absorption de gaz à partir d'un courant de gaz brut principal, ledit appareil comprenant:

- un dispositif de filtration pour purifier un courant de gaz brut, ledit dispositif de filtration comprenant un ou plusieurs éléments de filtre qui sont séparés à partir d'un dispositif de combustion;
- des moyens pour fournir un absorbant pour le courant de gaz;
- des moyens pour retirer le produit absorbant/résiduel du dispositif de filtration,
**caractérisé en ce que**
l'appareil comprend en outre:
- une unité de calcul (26) pour le traitement des données numériques;
dans lequel l'unité de calcul est configurée pour estimer le corps du tampon d'absorbant dans le filtre par la sommation d'une quantité d'absorbant qui n'a pas réagi (9) d'un nombre d'éléments de filtre (11), la quantité d'absorbant qui n'a pas réagi (9) pour un élément de filtre donné étant déterminée par la soustraction d'une quantité stoechiométrique d'un absorbant d'une quantité fournie d'absorbant (9) pour l'élément de filtre donnée (11), la quantité d'absorbant qui n'a pas réagi (9) pour un élément de filtre donné (11) étant fixé à zéro lorsque l'élément de filtre donné (11) est nettoyé.

16. Support lisible par ordinateur comprenant des informations stockées pour amener une ou plusieurs unités de calcul à estimer le corps du tampon d'absorbant dans un dispositif de filtration pour nettoyer un courant de gaz brut, ledit dispositif de filtration (13) comprenant un ou plusieurs éléments filtrants (11) qui sont séparés à parti r d'une unité de combustion (1) par la sommation d'une quantité d'absorbant qui n'a pas réagi (9) d'un nombre d'éléments de filtre (11), la quantité d'absorbant qui n'a pas réagi (9) pour u n élément de filtre donné étant déterminée par la soustraction d'un corps sto e-chiométrique d'un absorbant d'une quantité fournie d'absorbant (9) pour l'élément de filtre donnée (11), la quantité d'absorbant qui n'a pas réagi (9) pour un élément de filtre donné (11) étant fixé à zéro lorsque l'élément de filtre donné (11) est nettoyé.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11237023 A